# EUROPEAN PATENT SPECIFICATION

(11) **EP 3 689 431 B1**
(45) Date of publication and mention of the grant of the patent: **23.02.2022**
(21) Application number: 18860622.2
(22) Date of filing: 28.09.2018
(51) Int. Cl.: A63H 33/08, A45C 7/00, F16S 1/06

(54) **SHEET-LIKE SHAPED BODY AND STRUCTURE INCLUDING SAME**
BLATTÄHNLICHER FORMKÖRPER UND STRUKTUR DAMIT
CORPS EN FORME DE FEUILLE ET STRUCTURE LE COMPRENANT

(30) Priority: 29.09.2017 JP 2017190688
(43) Date of publication of application: 05.08.2020
(73) Proprietor: Kabushiki Kaisha Miyake Design Jimusho, Tokyo 151-0065 (JP)
(72) Inventor: WADA Ai, Tokyo 151-8554 (JP); FUKANO Yasuhiro, Tokyo 151-8554 (JP); SUZUKI Yasuhiro, Tokyo 151-8554 (JP); KIMURA Maori, Tokyo 151-8554 (JP); ISHIGURO Takeshi, Tokyo 162-0812 (JP)
(74) Representative: Mewburn Ellis LLP
(86) International application number: PCT/JP2018/036203
(87) International publication number: WO 2019/065948

(56) References cited:
- WO-A1-2007/136047
- WO-A1-2015/151183
- JP-A- H04 236 976
- JP-A- 2012 040 288
- US-A- 4 792 319

## Description

### TECHNICALFIELD

The present invention relates to a sheet-like moulded body and a structure including the same. In particular, the present invention relates to a sheet-like moulded body capable of constituting a wide range of structures including a bag and a wall material by connecting or coupling.

### BACKGROUND ART

For example, an assembly block including a plate-like piece and a coupling piece is known. In this assembly block, it is possible to assemble a three-dimensional structure by connecting a plurality of plate-like pieces through the coupling pieces (e.g., Patent Document 1). Patent Document 2 proposes an assembling block consists of the combination of a plate piece forming one surface of a hollow cube and a separate connecting piece for connecting this plate piece with another plate piece on a face adjacent to this plate piece. The connecting piece is formed of a bendable plate part and an engaging part provided on its top end, and the engaging part of the connecting piece is engaged with the plate surface of the plate piece.

### PRIOR ART DOCUMENT

### [Patent Document]

[Patent Document 1] Japanese Unexamined Patent Application Publication No. JP-A-1992-236976
[Patent Document 2] Japanese Patent Application Publication No. JPH04236976A

### SUMMARY OF THE INVENTION

### PROBLEM TO BE SOLVED BY THE INVENTION

However, in such an assembly block, the assembly block itself is not intended to bend in a particular direction, and the resulting three-dimensional body is considered to be less flexible. This limits the use and application of the assembly block, for example, having difficulty in applying to structures, such as bags, that require flexibility.

Accordingly, the present invention aims to provide a sheet-like moulded body that can bend in a particular direction, and a structure formed by the connection or coupling of such sheet-like moulded bodies (e.g., bag).

### MEANS TO SOLVE THE PROBLEM

To solve the problems described above, the present invention provides a sheet-like moulded body made in one piece comprising: a plurality of polygonal plate-like pieces; a connecting portion between adjacent (or neighboring) plate-like pieces, the connecting portion being capable of integrally connecting the adjacent plate-like pieces and capable of bending in a direction in which the surfaces of the adjacent plate-like pieces move closer with each other; and a coupling portion disposed so as to be adjacent to at least one of the plurality of plate-like pieces by extending outwardly from any of the plate-like pieces via a second connecting portion; wherein the sheet-like moulded body is capable of coupling with other sheet-like moulded body via the coupling portion.

In the sheet-like moulded body of the present invention as described above, it is preferable that the connecting portion has, on the surface, a groove portion formed along a longitudinal direction in which the connecting portion extends.

Further, in the sheet-like moulded body of the present invention as described above, it is preferable that the groove portion includes at least three grooves aligned in a width direction perpendicular to the longitudinal direction.

Further, in the sheet-like moulded body of the present invention as described above, it is preferable that the coupling portion includes a coupling piece extending outwardly from any one of the plurality of plate-like pieces, and a receiving portion detachably engaging with the coupling piece of the other sheet-like moulded body.

Further, the present invention provides a structure, such as a bag, including a plurality of sheet-like moulded bodies, wherein the adjacent sheet-like moulded bodies are coupled with each other to form a bag body. Such a bag is an example of the utilization form of the sheet-like moulded body, and a wall material is another utilization form.

### EFFECT OF THE INVENTION

With the present invention, it is possible to provide a sheet-like moulded body that can bend in a particular direction, and a structure formed by the connection or coupling of such sheet-like moulded bodies.

### BRIEF DESCRIPTION OF THE DRAWINGS

Fig. 1 is a perspective view showing schematically a sheet-like moulded body 1 according to a typical embodiment of the present invention.
Fig. 2 is a perspective view showing a state in which the sheet-like moulded body 1 of Fig. 1 bends.
Fig. 3 is a perspective view showing a manner in which a plurality of sheet-like moulded bodies 1 and 11 are coupled.
Fig. 4 is a perspective view showing a sheet-like moulded bodies 1 and 11 in coupling.
Fig. 5A is a diagram showing a bag 100 as an example of a structure constituted by coupling the sheet-like moulded bodies.
Fig. 5B is a diagram illustrating an example of the accessory parts for the bag 100.
Fig. 5C is a diagram illustrating other example of the accessory parts for the bags 100.
Fig. 5D is a diagram illustrating another example of the accessory parts for the bag 100.
Fig. 5E is a diagram illustrating still another example of the accessory parts for the bag 100.
Fig. 5F is a diagram illustrating still another example of the accessory parts for the bag 100.
Fig. 6 is a front view showing in detail the sheet-like moulded body 1 according to the present embodiment.
Fig. 7 is a rear view of the sheet-like moulded body 1 shown in Fig. 6.
Fig. 8 is a bottom view of the sheet-like moulded body 1 shown in Fig. 6.
Fig. 9 is an A-A partial enlarged view of Fig. 6.
Fig. 10 is a sectional view taken along line B-B of Fig. 9.
Fig. 11 is a diagram showing an engagement member 91 used for coupling a sheet-like moulded body.
Fig. 12 is a diagram showing an engagement member 92 used for coupling a sheet-like moulded body.
Fig. 13 is a diagram showing a manner in which the engagement members 91 and 92 are engaged.
Fig. 14 is a diagram showing other engagement member 95.

### DETAILED DESCRIPTION OF THE PRESENT INVENTION

A sheet-like moulded body in accordance with a typical embodiment of the present invention, and a bag as an exemplary application or utilization of the sheet-like moulded body will be described in detail with reference to the drawings. However, the application or utilization of the sheet-like moulded body is not limited to a bag. Since the drawings are for conceptual explanation of the present invention, dimensions, ratios or numbers may be exaggerated or simplified as required for easy understanding.

### [Outline and application of the sheet-like moulded body]

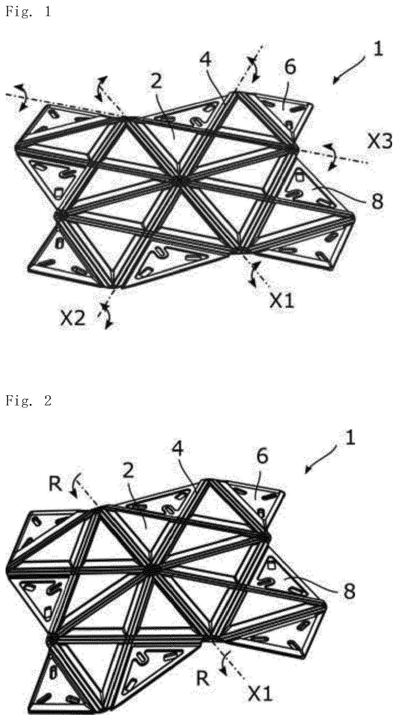

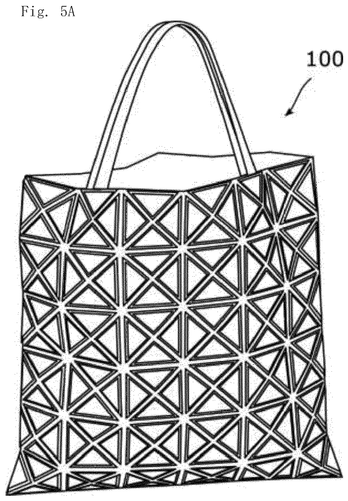

An outline and an exemplary application or utilization of the sheet-like moulded body 1 in accordance with a typical embodiment of the present invention is explained. The sheet-like moulded body 1 is a resin moulded article integrally moulded into a sheet-like or plate-like shape as shown in Fig. 1, enabling to constitute a structure such as a bag by coupling. Softness or flexibility of the sheet-like moulded body 1 as a whole may be set depending on the article to be produced or assembled, the setting of softness or flexibility can be carried out by adjusting the formulation of the resin material. For example, when constituting a bag (see Fig. 5A), the sheet-like moulded body 1 is preferably relatively soft and, when constituting a wall material, the sheet-like moulded body 1 may be relatively hard.

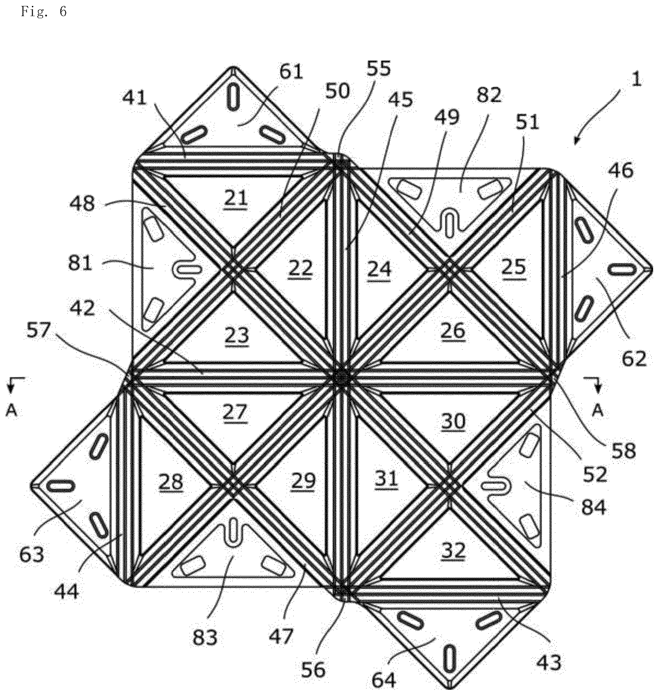

The sheet-like moulded body 1 includes a plurality of plate-like pieces 2 of a triangular shape as shown in Fig. 1, and are configured to bend along the connecting portion 4 for integrally connecting the adjacent plate-like pieces 2 to each other (e.g., see Fig. 2). The plate-like piece 2 is a generic term used to refer to the plate-like pieces 21 to 32 described in relation to Figs. 6 to 10, and the connecting portion 4 is also a generic term used to refer to the connecting portions 41 to 52 shown in Figs. 6 to 10.

For example, referring to the plate-like piece 2 shown in Fig. 1, the connecting portion 4 is arranged so as to surround the outer periphery (i.e. sides) of the plate-like piece 2. Therefore, the sheet-like moulded body 1 can bend around the axis lines X1-X3 in the connecting portion 4. Referring to Fig. 2, the sheet-like moulded body 1 can bend around the axis line X1 to the side indicated by arrow R (or inwardly). The sheet-like moulded body 1 can also bend to the opposite side from the arrow R (or outwardly).

The sheet-like moulded body 1 can be coupled or connected to other sheet-like moulded body via the coupling piece 6 and the receiving portion 8, both of which constitute a coupling portion. The coupling piece 6 is a generic term used to refer to the coupling pieces 61 to 64 described in relation to Figs. 6 to 10, and the receiving portion 8 is a generic term used to refer to the receiving portion 81 to 84 described in relation to Figs. 6 to 10.

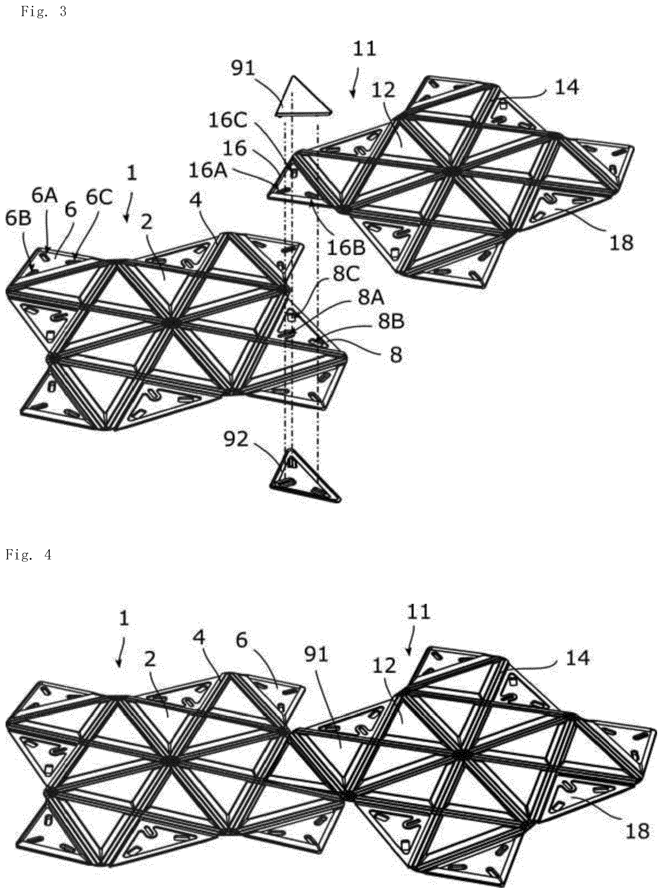

As shown in Figs. 3 and 4, the sheet-like moulded bodies 1 and 11 having symmetrical shapes to each other (e.g., line-symmetric shapes, or point-symmetric shapes) can be coupled via the receiving portion 8 and the coupling piece 16. However, it is possible to couple a plurality of sheet-like bodies 1 having the same shape (or a plurality of sheet-like bodies 11). It is also possible to form an annular body by connecting both ends of a single sheet-like body. In this description, the engagement members 91 and 92 are used to engage the sheet-like moulded bodies 1 and 11, but the engagement means of the sheet-like moulded bodies 1 and 11 is not limited to the engagement members 91 and 92.

By coupling a plurality of sheet-like moulded bodies 1 (or a plurality of sheet-like moulded bodies 11) in the manner mentioned above, it is possible to constitute the bag 100 as shown in Fig. 5A. It is also possible to constitute various structures such as a wall material. The structures constituted in the above-mentioned manners can flexibly change their shapes. In addition, simple replacement of a damaged part enables easy repair and maintenance of the sheet-like moulded bogy.

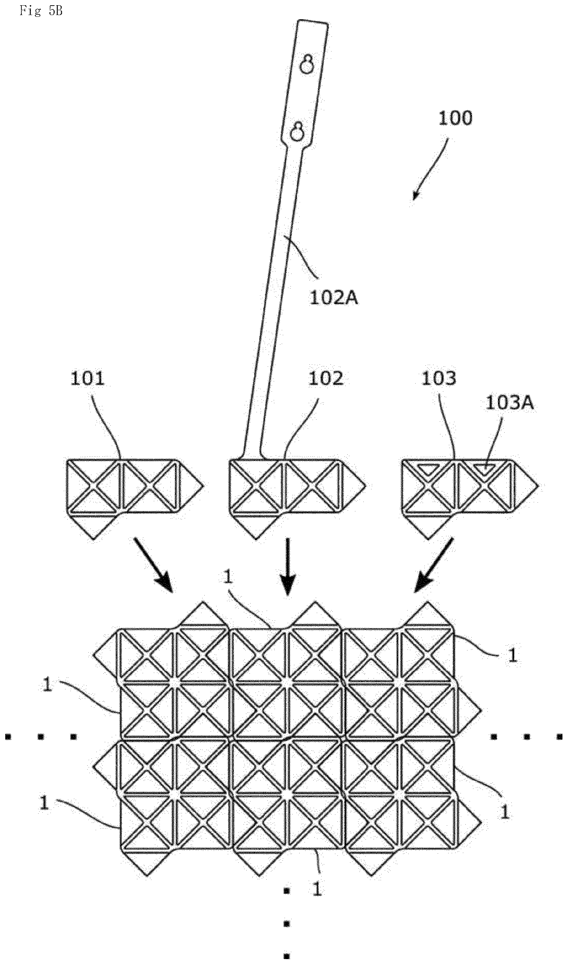

Further, in order to constitute the bag 100 as shown in Fig. 5A, various accessory parts are provided. Examples of these accessory parts include: a part 101 without both of the coupling piece 6 and the receiving portion 8 on one end side serving as an edge of the bag; a part 102 including a handle 102A; and a part 103 including a magnet 103A for closing the opening of the bag, as shown in Fig. 5B. These parts 101-103 are attached to the edges or ends of the bag 100 to align the ends or edges of the bag 100.

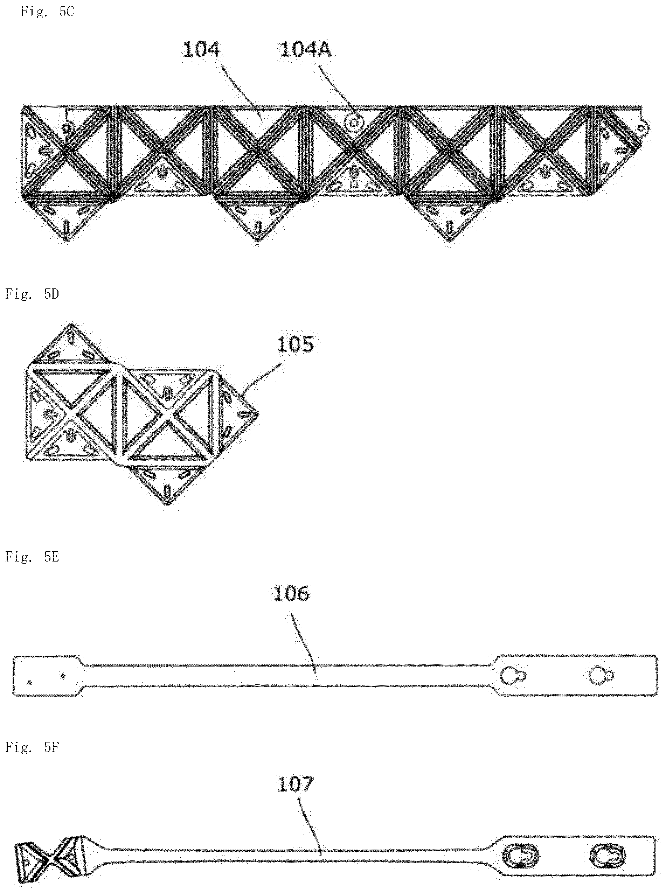

Additionally, a part 104 having a mounting mechanism 104A (e.g., aperture) shown in Fig. 5C is provided for independent handpieces 106 and 107 as shown in Figs. 5E and 5F. A small part 105 is also provided for use as a spacer as shown in Fig. 5D. Such various parts enable to extend the availability or applicability of the sheet-like moulded bodies 1 and 11. The handpieces 106 and 107 may be twisted toward the center from both ends so that the direction of the surfaces of both ends be substantially perpendicular to the direction of the surface of the center. Thus, the handpieces 106 and 107 can be fit to the bag naturally.

### [Constitution of the sheet-like moulded body]

The constitution of the sheet-like moulded body will now be described in detail. The present embodiment provides two types of sheet-like moulded bodies 1 and 11 having symmetrical shapes, and the sheet-like moulded body 1 will be typically described here.

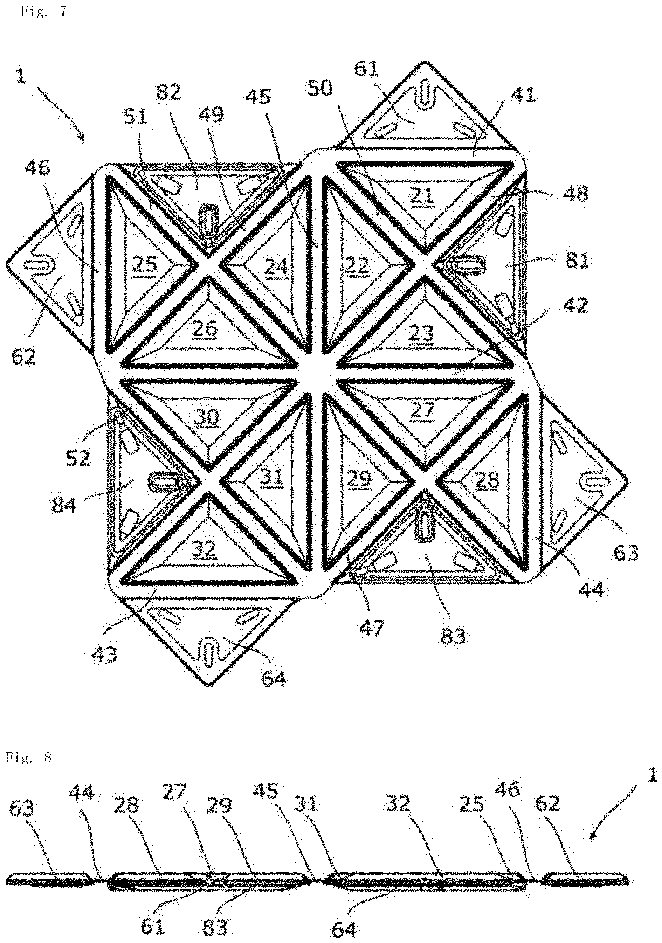

The sheet-like moulded body 1 is of a sheet-like or plate-like shape as a whole as shown in Fig. 8, and has the plate-like pieces 21 to 32, the connecting portions 41 to 52, and the coupling pieces 61 to 64 and the receiving portion 81 to 84 both of which are used as coupling portions, as shown in Fig. 6 for example. Each component is disposed so that the plate-like pieces 21 to 32 and the receiving portion 81 to 84 form substantially square shapes and that three plate-like pieces and one receiving portion (e.g., plate-like pieces 21 to 23 and the receiving portion 81) also form substantially square shapes. However, the plate-like piece 2, the connecting portion 4, the coupling portion (the coupling piece 6 and the receiving portion 8) is not limited to such constitution and arrangement.

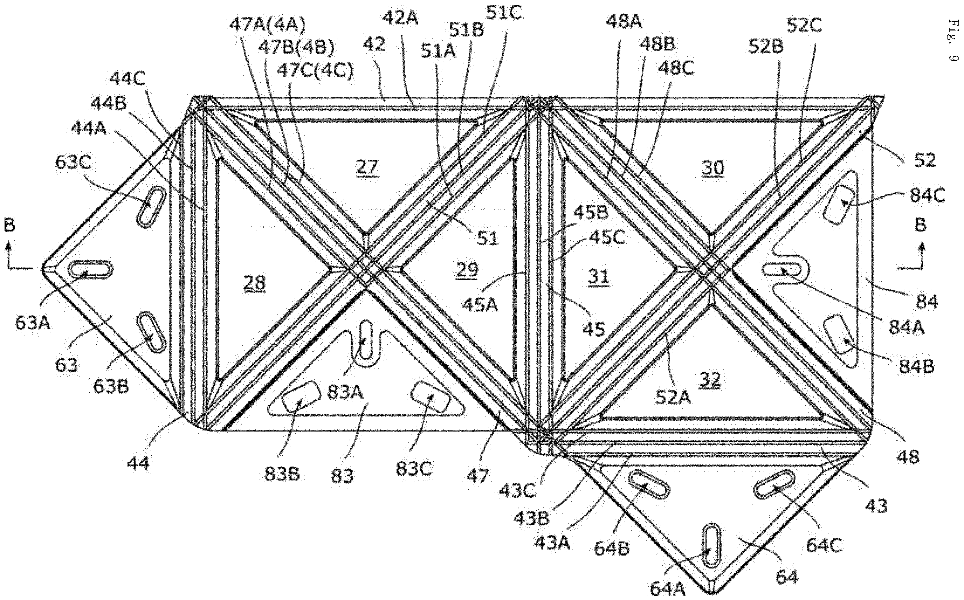

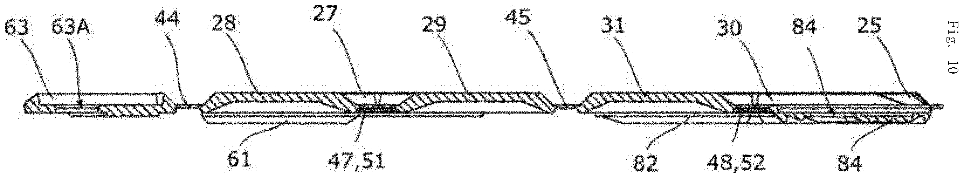

Each of the plate-like pieces 21 to 32 is a resin member exhibiting a triangular shape, and adjacent pieces are connected via the connecting portions 41 to 52. Since the plate-like pieces 21 to 32 have substantially the same shape (e.g., substantially isosceles right triangle), the plate-like piece 28 shown in Fig. 9 will be described as an example. The plate-like piece 28, as shown in Fig. 10, rises on or toward one surface (or outer surface) of the sheet-like moulded body 1. As for a manner as to how the plate-like piece rises, the plate-like piece may have a trapezoidal cross section as shown in Fig. 10, or may have a semicircular or arcuate cross section, for example. Such shapes enable increased rigidity of the plate-like piece 28.

Further, a recess portion is formed on the surface (or inner surface) of the plate-like pieces 21 to 32 as shown in Fig. 10, and such a recess portion corresponds to the surface shape (or bulge) of the engagement member 92. Therefore, when a plurality of sheet-like moulded bodies 1 overlap in a manner in which the inner surfaces of the bodies face with each other, the engagement member 92 fits into any one of the recess portions of the plate-like pieces 21 to 32. Thus, the thickness can be reduced in a structure like a bag shown in Fig. 5, that is folded along particular connecting portions.

The connecting portions 41 to 52 are resin members interposed between the adjacent plate pieces 21 to 32 to integrally connect the adjacent plate-like pieces 21 to 32, as shown in Figs. 6 and 7. Alternatively, the connecting portions 41 to 52 can be said to be a member surrounding the plate-like pieces 21 to 32. For example, the plate-like piece 22 is surrounded by the connecting portions 45, 48 and 50. In case that the plate-like pieces 21 to 32 are of a substantially isosceles right triangle shape, the connecting portions 41 to 52 extend substantially straight to form strips.

The thickness of the connecting portions 41 to 52, as shown in Fig. 10, is thinner than the thickness of the plate-like pieces 21 to 32. Therefore, the rigidity of the connecting portions 41 to 52 is lower than that of the plate pieces 21 to 32. Therefore, when being bent in its entirety, the sheet-like moulded body 1, as shown in Fig. 2 for example, bends mainly at the connecting portions 41 to 52. That is, the connecting portions 41 to 52 can bend in a direction such that the surfaces (the outer surface or the inner surface) of the adjacent plate pieces 21 to 32 move closely or closer. The plate-like pieces 21 to 32 themselves may be deformed, and in such a case, the connecting portions 41 to 52 bends greater than the plate-like pieces 21 to 32 due to the above-described different rigidity of the portions.

The connecting portion 4 as a generic term of the connecting portions 41 to 52 has groove portion or grooves 4A to 4C on the outer surface to facilitate bending. The grooves 4A to 4C is a generic term used for referring to the grooves 41A, B and C to 52A, B and C of the connecting portions 41 to 52. For example, the connecting portion 47 has grooves 47A to 47C extending along a direction in which the connecting portion 47 extends (or the longitudinal direction), as shown in Fig. 9. The depth and width of the grooves 4A to 4C are appropriately set in accordance with the bendability of the connecting portion 4, the strength of the connecting portion 4 and the like. The connecting portion 4 is thinner and flatter than the height (or the width between the front surface and the rear surface) and, further, the thickness of the plate-like piece 2. The grooves 4A to 4C may be thinner than the connecting portion 4. Further, the connecting portion 4, as shown in Fig. 10 for example, is disposed at a position recessed from the front and rear surfaces of the plate-like piece 2.

Further, the grooves 4A to 4C may be formed on the inner surface of the connecting portion 4. In this case, the grooves will be disposed on the rear or inner side of a structure formed by coupling a plurality of sheet-like moulded bodies 1, which results in a simpler appearance of the structure.

Each connecting portion 4 may have at least one groove, and preferably three or more grooves. In the present embodiment, three grooves 41A, B and C to 52A, B and C are provided for each of the connecting portions 41 to 52. Referring to the connecting portion 45 for example, as shown in Fig. 9, the grooves 45A and 45C are arranged along the boundary between the plate-like pieces 29 and 31, and the groove 45B is disposed between these grooves.

In case that three or more grooves are provided as mentioned in the above, the distances between adjacent grooves (e.g., the distance between the grooves 45A and 45B, and the distance between the grooves 45B and 45C) are preferably substantially equal as shown in Fig. 9, for example. arrangement of the grooves at equal intervals enables smooth bending of the connecting portion 4.

The coupling piece 6 and the receiving portion 8, as an example of the connecting portion, is provided for coupling a plurality of sheet-like moulded bodies 1 (or a plurality of sheet-like moulded bodies 11), and include a coupling pieces 61 to 64 and the receiving portions 81 to 84 as shown in Fig. 6. In the present embodiment, the engagement members 91, 92 are used auxiliarily for coupling.

Specifically, the coupling piece 6 extends outwardly from any one of the plate-like pieces 2 via the connecting portion 4. In the present embodiment, the coupling pieces 61 to 64 are substantially triangular, extending outwardly from the plate-like pieces 21, 25, 28 and 32 (or the connecting portions 41, 43, 44 and 46). However, the coupling pieces 61 to 64 are not limited to such a shape and arrangement.

The coupling pieces 6 are preferably arranged symmetrically with respect to the center of the sheet-like moulded body 1 from the viewpoint of easy coupling of a plurality of sheet-like moulded bodies 1 (or the sheet-like moulded bodies 11). In the present embodiment, the coupling pieces 61 to 64 are positioned in rotation by 90 degrees.

The coupling piece 6 is provided with the apertures 6A to 6C for engaging the receiving portion 8 (see Fig. 3). Referring to the coupling piece 63 shown in Fig. 9 for example, the coupling piece 63 has apertures 63A to 63C. Inserting the claw portions 91A to 91C of the engagement member 91 into the above apertures 6A to 6C and the apertures 8A to 8C of the receiving portion 8 can prevent the relative movement (or shift) between the coupled sheet-like moulded bodies 1 (or the sheet-like moulded bodies 11).

The receiving portion 8 detachably engages with the coupling piece 6 (or the coupling piece 16) of other sheet-like moulded body 1 (or the sheet-like moulded body 11). In this embodiment, the receiving portions 81 to 84 are substantially triangular corresponding to the coupling pieces 61 to 64. Each of the receiving portions 81 to 84 can be engaged with any one of the coupling pieces 61 to 64.

The receiving portion 8 is preferably arranged symmetrically with respect to the center of the sheet-like moulded body 1 so as to correspond to the coupling piece 6. In this embodiment, the receiving portions 81 to 84 are positioned in rotation by 90 degrees. Further, the receiving portion 8 is preferably disposed at a position facing the outer peripheral edge of the sheet-like moulded body 1 so as to easily overlap the coupling piece 6.

The receiving portion 8 is provided with the apertures 8A to 8C for engaging the coupling piece 6 (see Fig. 3). The apertures 8A to 8C are provided so as to correspond to the apertures 6A to 6C of the coupling piece 6. When the receiving portion 8 and the coupling piece 6 overlap or fit, the apertures 8A to 8C overlap or fit the apertures 6A to 6C, thereby enabling insertion of the claw portions 91A to 91C of the engagement member 91 to the apertures.

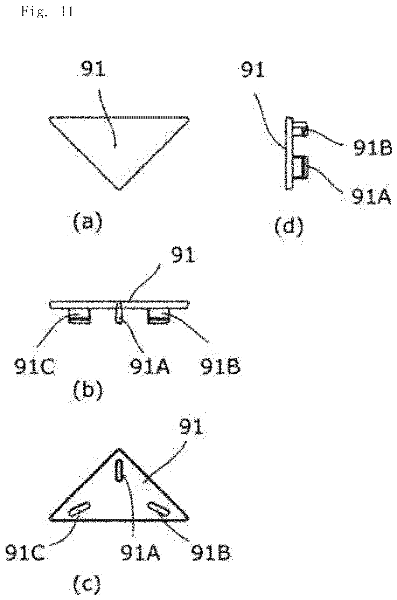

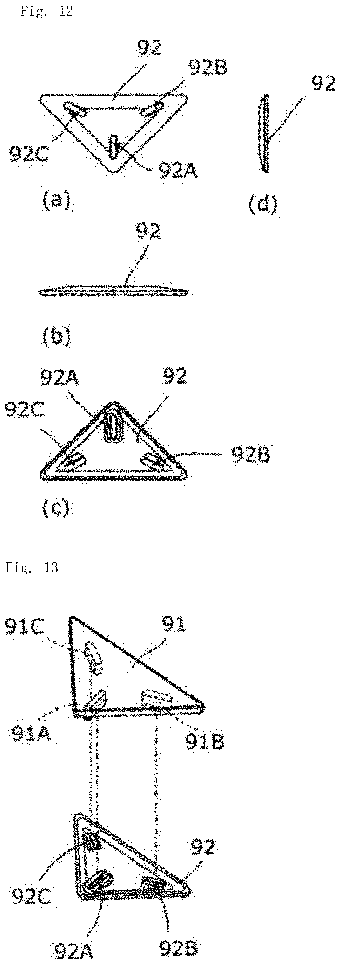

In the present embodiment, the engagement members 91 and 92 are used for engaging the coupling piece 6 and the receiving portion 8. The engagement members 91 and 92 are, as shown in Figs. 11 and 12, plate-like members having substantially triangular shapes. The engagement member 91 is provided with the claw portions 91A to 91C protruding toward the engagement member 92 with which the apertures 92A to 92C corresponding to the claw portions 91A to 91C are provided. Therefore, as shown in Fig. 13, the claw portions 91A to 91C of the engagement member 91 are inserted into the apertures 92A to 92C of the engagement member 92 and then are hooked on the edge of the apertures 92A to 92C, thereby enabling engagement of the engagement members 91 and 92. Further, placing the apertures 92A to 92C and the claw portions 91A to 91C near the corners (or vertices) of the triangular plate-like member 2 may prevent turn over of the corners of the engagement member 91, 92 when the sheet-like moulded bodies 1 and 11 are coupled.

Therefore, engaging the coupling piece 16 and the receiving portion 8 via the engagement members 91 and 92 enables reliable coupling of the sheet-like moulded bodies 1 and 11 as shown in Figs. 3 and 4. By coupling the sheet-like moulded bodies 1 and 11 one after another in the above manner, it is possible to form structures of desired shapes, such as a bag 100 shown in Fig. 5A and a wall ornament, for example. Further, the sheet-like moulded bodies 1 can be coupled to form an annular structure. The sheet-like moulded bodies 1 can be coupled to form three-dimensional structural portions, such as a bottom and a corner of a bag, for example.

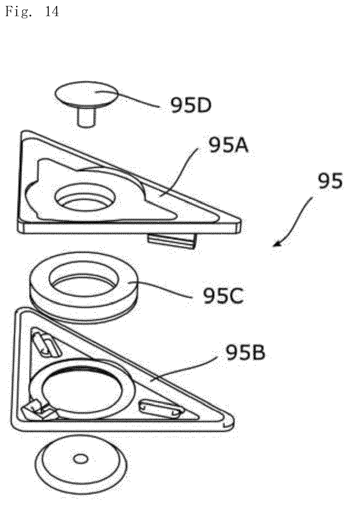

Alternatively, the engagement member 95 may be used in order to detachably engage the coupling piece 6 and the receiving portion 8. As shown in Fig. 14, the engagement member 95 includes a pair of pieces 95A and 95B having the shapes (e.g., triangular shapes) corresponding to the coupling piece 6 and the receiving portion 8, and an annular magnet 95C interposed between these pieces. The engagement member 95 is attached to each of the coupling piece 6 and the receiving portion 8. For example, in case that the engagement member 95 is attached to the coupling piece 6, the coupling piece 6 and the magnet 95C are sandwiched or caught by a pair of pieces 95A and 95B and fixed with a fixing member such as a screw or a yoke 95D (made of iron). The yoke 95D can concentrate the magnetic force, thereby increasing the attractive force.

Once the engagement member 95 is attached to the corresponding coupling piece 6 and the receiving portion 8, the magnet 95C incorporated in the coupling piece 6 and the magnet 95C incorporated in the receiving portion 8 are attracted from each other, thereby engaging the coupling piece 6 with the receiving portion 8. When the coupling piece 6 and the receiving portion 8 are moved away from each other against the attractive force of the magnets 95C, the coupling piece 6 is separated from the receiving portion 8. The above engagement member 95 enables a lid covering the opening of a bag to detachably attached to the body of the bag. Further, attaching a pair of engagement members 95 to the side of the opening of a bag enables closing or opening of the side of the opening depending on the use scene.

In the present embodiment, as shown in Fig. 6, a pair of bulging portions 55 and 56 and a pair of inclined portions 57 and 58 are provided at the outer periphery of the sheet-like moulded body 1 and between the coupling piece 6 and the receiving portion 8. Once the sheet-like bodies 1 are coupled to each other in a predetermined direction, the bulging portions 55 and 56 overlap to each other, thereby filling a gap between the sheet-like bodies 1. Further, once the sheet-like moulded bodies 1 are coupled to each other in other directions, the inclined portions 57 and 58 are positioned adjacent to each other, thereby reducing a gap between the sheet-like moulded bodies 1. The bulging portions 55 and 56 are thinner and flatter than the thickness of the plate-like piece 2 and lower than the height of the plate-like piece 2.

Bulging portions may be formed at the intersection of four or more connecting portions of the sheet-like moulded body 1 (e.g. the intersection of the connecting portions 42, 45, 48 and 51 in Fig. 6). The bulging portion enables flexible deformation of the sheet-like moulded body 1, not only in the longitudinal and transverse directions, but also in a bulging or outward direction. Further, a plurality of grooves thinner than the thickness of the bulging portion enable further flexible deformation. For example, the bulging portion positioned in the corner connecting the bottom and the side wall of a bag (or the corner capable of being deformed in the three directions) can facilitate flexible deformation. In contrast, in case no bulging portion is provided at the intersection of the connecting portions, the sheet-like moulded body 1, when returning to the original flat shape, exerts tension on the engagement members. Such a tension causes an excess load on the engagement member, resulting the release of the engagement member when in use.

The exemplary embodiments of the present invention have been described above with reference to the drawings, but the present invention is not limited to these embodiments, and there are other improvements and modifications to the extent that does not deviate from the spirit and teaching described in the claims. It is readily understood by those skilled in the art that all such improvements and modifications are included in the technical scope of the present invention.

For example, although, in the present embodiment, the engagement members 91 and 92 are used for engaging the coupling piece 6 and the receiving portion 8, the coupling piece 6 and the receiving portion 8 themselves may include an engaging function of the engagement members 91 and 92. the coupling piece 6 and the receiving portion 8 may have a potion where the engagement or the coupling is made by fusion.

Further, the sheet-like moulded body of the present invention can be composed of various resin materials such as polypropylene, polyethylene, and polycarbonate. Moreover, the sheet-like moulded body need not be made from one type of resin material. For example, the plate-like piece may be moulded with a hard resin, and the connecting portion may be moulded with a soft material softer than the hard resin. Conversely, the connecting portion may be moulded with a hard resin, and the plate-like piece may be moulded with a soft material softer than the hard resin. The sheet-like moulded body may be softened by mixing an elastomer into a thermoplastic resin such as polypropylene. The engagement members, which are moulded with a hard resin such as polypropylene and polycarbonate and is harder than the sheet-like moulded body, can be reliably engaged with each other.

Further, it is possible to add various additives such as softeners and flame retardants to these resin materials as necessary. Furthermore, the sheet-like moulded body of the present invention may have a laminated structure having a core layer and a skin layer.

In the above embodiment, the plate-like piece of a triangular shape has been described, but the plate-like piece is not limited to a triangular shape. For example, a plate-like piece may have a polygonal shape such as a square shape or a circular shape. The plate-like piece of such a shape can be made by forming a gap between the plate-like piece and the connecting portion.

Further, in the above embodiment, the sheet-like moulded body has a substantially square shape and the plate-like piece has a triangular shape, but the body and the piece are not limited thereto. For example, the sheet-like moulded body may have an approximately square shape and the plate-like piece may have a square shape. In this case, the coupling piece and the receiving portion may be of the same shapes as the plate-like piece. Thus, the connecting portion may be arranged linearly, enabling easy bending of the sheet-like moulded body.

### INDUSTRIAL APPLICABILITY

The sheet-like moulded body of the present invention can be applied to various structures. In addition to the bag described in the above embodiment, the sheet-like moulded body can be widely used as, for example, a suitcase, an interior material such as a wall material, a roofing material, a building material such as a tent, a sheet material, a carpet, a mat, a decorative material, various containers such as vases, and a shade of a lighting apparatus.

### EXPLANATION OF NUMERALS

- 1,11...: Sheet-like moulded body,
- 2,21 to 32...: Plate-like piece,
- 4,41 to 52...: Connecting portion,
- 6,61 to 64...: Coupling piece,
- 8,81 to 84...: Receiving portion.

## Claims

1. A sheet-like moulded body (1, 11) made in one piece, for making structures, comprising:
a plurality of polygonal plate-like pieces (2, 21 to 32);
a connecting portion (4, 41 to 52) between adjacent plate-like pieces (2, 21 to 32), the connecting portion being capable of integrally connecting the adjacent plate-like pieces and capable of bending in a direction in which the surfaces of the adjacent plate-like pieces move closer with each other; and
a coupling portion disposed so as to be adjacent to at least one of the plurality of plate-like pieces (2, 21 to 32) by extending outwardly from any of the plate-like pieces via a second connecting portion;
wherein the sheet-like moulded body (1, 11) is capable of coupling with other sheet-like moulded body via the coupling portion.

2. The sheet-like moulded body (1, 11) in accordance with claim 1, wherein the connecting portion (4, 41 to 52) has, on the surface, a groove portion formed along a longitudinal direction in which the connecting portion extends.

3. The sheet-like moulded body (1, 11) in accordance with claim 2, wherein the groove portion includes at least three grooves (4A-C, 41A-C to 52A-C) aligned in a width direction perpendicular to the longitudinal direction.

4. The sheet-like moulded body (1, 11) in accordance with any one of claims 1 to 3, wherein the coupling portion includes a coupling piece (6, 61 to 64) extending outwardly from any one of the plurality of plate-like pieces (2, 21 to 32), and a receiving portion (8, 81 to 84) detachably engaging with the coupling piece of the other sheet-like moulded body.

5. A structure including a plurality of sheet-like moulded bodies (1, 11) in accordance with any one of claims 1 to 4,
wherein the adjacent sheet-like moulded bodies (1, 11) are coupled with each other to form a bag body (100).

## Patentansprüche

1. Blattartiger Formkörper (1, 11), der einstückig hergestellt ist, zur Erzeugung von Strukturen, Folgendes umfassend;
eine Vielzahl von polygonalen plattenartigen Teilen (2, 21 bis 32);
einen Verbindungsabschnitt (4, 41 bis 52) zwischen benachbarten plattenartigen Teilen (2, 21 bis 32), wobei der Verbindungsabschnitt in der Lage ist, die benachbarten plattenartigen Teile formschlüssig miteinander zu verbinden und in der Lage ist, sich in eine Richtung zu verbiegen, in der die Oberflächen der benachbarten plattenartigen Teile sich einander annähern; und
einen Kopplungsabschnitt, der so angeordnet ist, dass er benachbart zu zumindest einem aus der Vielzahl von plattenartigen Teilen (2, 21 bis 32) ist, indem er sich von einem der plattenartigen Teile über einen zweiten Verbindungsabschnitt nach außen erstreckt;
wobei der blattartige Formkörper (1, 11) in der Lage ist, über den Kopplungsabschnitt mit anderen blattartigen Formkörpern gekoppelt zu sein.

2. Blattartiger Formkörper (1, 11) nach Anspruch 1, wobei der Verbindungsabschnitt (4, 41 bis 52) auf der Oberfläche einen Nutabschnitt aufweist, der entlang einer Längsrichtung, in die sich der Verbindungsabschnitt erstreckt, ausgebildet ist.

3. Blattartiger Formkörper (1, 11) nach Anspruch 2, wobei der Nutabschnitt zumindest drei Nuten (4A-C, 41A-C bis 52A-C) umfasst, die in eine Breitenrichtung normal zur Längsrichtung ausgerichtet sind.

4. Blattartiger Formkörper (1, 11) nach einem der Ansprüche 1 bis 3, wobei der Kopplungsabschnitt einen Kopplungsteil (6, 61 bis 64), der sich von einem aus der Vielzahl von plattenartigen Teilen (2, 21 bis 32) nach außen erstreckt, und einen Aufnahmeabschnitt (8, 81 bis 84), der mit dem Kopplungsteil des anderen blattartigen Formkörpers lösbar in Eingriff steht, umfasst.

5. Struktur, die eine Vielzahl von blattartigen Formkörpern (1, 11) nach einem der Ansprüche 1 bis 4 umfasst, wobei die benachbarten blattartigen Formkörper (1, 11) miteinander gekoppelt sind, um einen Taschenkörper (100) auszubilden.

## Revendications

1. Corps moulé analogue à une feuille (1, 11) réalisé d'un seul tenant, pour fabriquer des structures, comprenant :
une pluralité de pièces analogues à une plaque polygonales (2, 21 à 32) ;
une partie de connexion (4, 41 à 52) entre des pièces analogues à une plaque adjacentes (2, 21 à 32), la partie de connexion étant capable de connecter d'un seul tenant des pièces analogues à une plaque adjacentes et capable de fléchir dans une direction dans laquelle les surfaces des pièces analogues à une plaque adjacentes se rapprochent les unes des autres ; et
une partie de couplage disposée de manière à être adjacente à au moins une de la pluralité de pièces analogues à une plaque (2, 21 à 32) en s'étendant vers l'extérieur à partir de l'une quelconque des pièces analogues à une plaque via une seconde partie de connexion ;
dans lequel le corps moulé analogue à une feuille (1, 11) est capable de se coupler à un autre corps moulé analogue à une feuille via la partie de couplage.

2. Corps moulé analogue à une feuille (1, 11) selon la revendication 1, dans lequel la partie de connexion (4, 41 à 52) a, sur la surface, une partie de rainure formée le long d'une direction longitudinale dans laquelle la partie de connexion s'étend.

3. Corps moulé analogue à une feuille (1, 11) selon la revendication 2, dans lequel la partie de rainure comprend au moins trois rainures (4A-C, 41A-C à 52A-C) alignées dans une direction de largeur perpendiculaire à la direction longitudinale.

4. Corps moulé analogue à une feuille (1, 11) selon l'une quelconque des revendications 1 à 3, dans lequel la partie de couplage comprend une pièce de couplage (6, 61 à 64) s'étendant vers l'extérieur à partir de l'une quelconque de la pluralité de pièces analogues à une plaque (2, 21 à 32), et une partie de réception (8, 81 à 84) venant en prise de manière détachable avec la pièce de couplage de l'autre corps moulé analogue à une feuille.

5. Structure comprenant une pluralité de corps moulés analogue à une feuille (1, 11) selon l'une quelconque des revendications 1 à 4,
dans lequel les corps moulés analogue à une feuille adjacents (1, 11) sont couplés les uns aux autres pour former un corps de type de poche (100).
